# EUROPEAN PATENT SPECIFICATION

(11) **EP 0 456 660 B1**
(45) Date of publication and mention of the grant of the patent: **12.10.1994**
(21) Application number: 90902062.0
(22) Date of filing: 02.01.1990
(51) Int. Cl.: F16L 11/12, B65G 53/52

(54) **WEAR INDICATOR FOR MATERIAL TRANSFER SYSTEMS**
VERSCHLEISSANZEIGER FÜR MATERIALAUSTAUSCHSYSTEME
INDICATEUR D'USURE POUR SYSTEMES DE TRANSFERT DE MATIERE

(30) Priority: 01.02.1989 US 305390
(43) Date of publication of application: 21.11.1991
(73) Proprietor: KLEISLE, James R, St. Louis, MO 63123 (US)
(72) Inventor: KLEISLE, James R, St. Louis, MO 63123 (US)
(74) Representative: Allen, William Guy Fairfax
(86) International application number: US9000045
(87) International publication number: WO9008915

(56) References cited:
- EP-A- 0 058 653
- DE-A- 1 521 747
- DE-A- 2 552 508
- GB-A- 810 999
- US-A- 2 181 035
- US-A- 2 220 895
- US-A- 2 243 568
- US-A- 2 624 308
- US-A- 4 474 217
- US-A- 4 617 822

## Description

The invention relates generally to particulate and fluid material transfer systems, and more particularly to an early warning system for visually and/or electronically detecting internal wear in material transfer conduits.

Internal wear in material transfer systems caused by abrasion or erosion during the flow of particulate or fluid materials therethrough ultimately results in conduit wear-through and failure and, therefore, constitutes a continuing problem in manufacturing facilities. In the molding process for fabricating various plastic items, for instance, the particulate material constitutes plastic "pellets" which are transferred from remote storage silos to the molding machines through material transfer conduits typically formed of aluminum or stainless steel pipes or glass or ceramic lined steel conduits. The degree of erosion and internal conduit wear depends upon several factors, such as type and thickness of the conduit material, the abrasive nature or degree of the material being transferred, the flow rate, etc. Conduit failure is accelerated in transfer systems for plastic pellets containing fiberglass as a constituent thereof. Thus, a typical aluminum piped system for fiberglass reinforced pellets may last only about three months, whereas a stainless steel system may last for about three years depending upon the wall gauge of the transfer conduit and configuration of the system. Glass tubing is as durable as stainless steel and available with thicker walls so that it may have a life span in excess of ten years. In any case, there is no present way of predetermining with accuracy when or just where wear-through and conduit failure will occur, and such occurrance obviously creates clean-up problems from massive dumping and potentially extensive down-time for repair or replacement of the worn-out conduits. In cases involving the transfer of certain chemicals and hazardous materials, health and safety problems are likely to result from failure of such material transfer systems.

Warning systems for detecting fluid leaks are known in the prior art. For example, Frank U.S. patent 3,911,959 describes an early warning hose comprising a water-absorbent layer sandwiched between an inner hose and a translucent outer hose so that any liquid leaking from the inner hose permeates the absorbing layer and may be observed because of the translucency of the outer hose.

Sibthorpe U.S. patent 3,299,417 suggested a flexible pressure tube and conduit having two walls separated by a narrow gap. The inner wall serves to normally confine the pressure medium inside the tube and the outer wall forms a closed chamber or jacket with the inner tube. The gap communicates with a pressure-responsive signal device to produce a signal when the pressure in the jacket rises due to leakage from the interior tube through the inner wall.

Meginnis U.S. patent 3,922,999 describes a sight glass used in fluid systems of a corrosive nature, the sight glass having an insert of a nontransparent color, and preferably opaque, that is secured in a recess in the exposed surface of the glass. When the insert is no longer visible, this indicates that the exposed surface has been worn to an unsafe condition and the sight glass requires replacement.

DE-A-1,521,747 discloses the application of elastomer coatings or linings to protect metal surfaces from erosion or corrosion, and teaches the insertion of coloured warning layers applied underneath and normally hidden by the elastomer layers so that mechanical or chemical damage to the protective lining can be detected.

Davis U.S. Patent No. 4,617,822 discusses abrasive wear within transfer systems; and suggests drilling holes 17 in the conduit pipe, then securing rapid wear metal plugs or cover plates 18 to the inner surface and then applying an inner lining covering the plugs and coating the inner pipe wall. Upon wear-through of the lining and any plug, the material being conveyed will leak out through the hole 17 and be detected.

It is also known that double-containment systems using dual concentric pipes have been employed in material transfer systems, but without visual detection apparatus. Also, electronic leak detection has been offered for use at selected strategic points in toxic chemical and like fluid conveying systems, typically at connection joints between pipes or with tanks, pumps or the like.

These prior art systems are generally ineffective in identifying wear in material transfer conduits conveying viscous abrasive fluids or particulate materials such as carbon particles or plastic pellets. Furthermore, these systems are ineffective in specifically indicating the location of the wear throughout the transfer system.

It is an object of this invention to provide a wear indicator which detects and visually indicates the location of wear-through in any portion of a material transfer conduit.

It is another object of this invention to provide a wear indicator or early warning system which visually and/or electronically detects and indicates the existence and location of a worn area in a transfer conduit.

Another object of this invention to provide a wear indicator for indicating wear in a material transfer conduit which is relatively inexpensive and applicable to existing transfer systems.

It is yet another object of the present invention to provide an early warning system for a conduit conveying plastic pellets, and which detects and indicates conduit wear-through before leakage or dumping of the pellets occurs.

Another object of the invention is to provide wear indicator improvements in particulate conveying systems for visually detecting an area of conduit wear-through at an early stage and permit corrective maintenance to obviate catastrophic failure of the system.

These and other objects and features will become more apparent hereinafter.

According to the present invention there is provided an early warning system in combination with a material transfer system, said material transfer system having an elongated area to be monitored for internal wear caused by the erosive action of a transfer material flowing past said elongated monitored area and comprising a material transfer conduit having a tubular wall with an inner wall surface forming a material flow passageway and an outer wall surface, characterised by said early warning system comprising wear detection means intimately associated with at least an elongate portion of said outer wall surface and defining said monitored area, and comprising a translucent outer containment layer which encases the outer wall surface of said tubular wall, and by said wear detection means comprising a visible indicator having a distinguishing characteristic which is visually discernable through said outer containment layer for indicating the relative integrity along the length of the tubular wall, whereby when said erosive action abrades and wears away said visible indicator of said wear detection means where said erosive flow action of said transfer material on said inner wall surface has worn through the associated portion of said tubular wall, such abrasion and wear-through will be visually indicated, thereby providing an early warning of the impending failure of said material transfer system, said outer containment layer being constructed and arranged for confining the transfer material within the flow passageway when said transfer means and said wear detection means wears-through.

In order that the invention may be more readily understood the following description is given, by way of example only, with reference to the accompanying drawings in which:
FIGURE 1 is a diagrammatic view of a material transfer system in which the invention may be embodied;
FIGURE 2 is a longitudinal, cross-sectional view of a length of transfer conduit embodying one form of the invention;
FIGURE 3 is a greatly enlarged elevational view, partly broken away, of a straight section of transfer conduit taken substantially at line 3-3 of FIGURE 1, and showing another form of the invention;
FIGURE 4 is a view similar to FIGURE 3 of a conduit elbow of the transfer system taken substantially at line 4-4 of FIGURE 1, and showing a modification of the invention form shown in FIGURE 3;
FIGURE 5 is another view similar to FIGURE 3 of a conduit "Y" connection taken at line 5-5 of FIGURE 1;
FIGURE 6 is a longitudinal, cross-sectional view of a length of colored transfer conduit having a spirally wound electronic detection conductor;
FIGURE 7 is a longitudinal, cross-sectional view of a length of transfer conduit having a combined visual and electronic conductor embodying the invention and showing a wear-through area;
FIGURE 8 is a diagram of a material transfer path formed of several sections of transfer conduit and having an electronic conductor connected to an open circuit detector; and
FIGURES 9A and 9B illustrate two embodiments of an open circuit detector and alarm for use with the electronic embodiment of the invention.

### Preferred Embodiment of the Invention

The present wear indicator invention is applicable to a wide range of material conveying or transfer systems for transfer materials such as particulate materials and viscous fluids containing abrasive substances, e.g. fused alumina, granular or powdered phosphates, silicates and calcines, grain, slurries containing graphite (carbon) and the like. These material transfer systems operate with pneumatic or vacuum material flow movers of 30 psi or above in a high pressure dense phase conveying producing particulate flow velocities in the magnitude of 5000 ft./min., and in the range of 10-15 psi in a dilute phase which produces particulate velocities in the magnitude of about 3500 ft./min. All particulate materials, abrasive slurries and the like have an erroding effect on the inner wall surface of transfer conduits that ultimately will cause wear-through and failure, but the life span and location of failure in the transfer system is unpredicatable due to "duning" of material creating turbulance and eddy effects, especially in the dense phase.

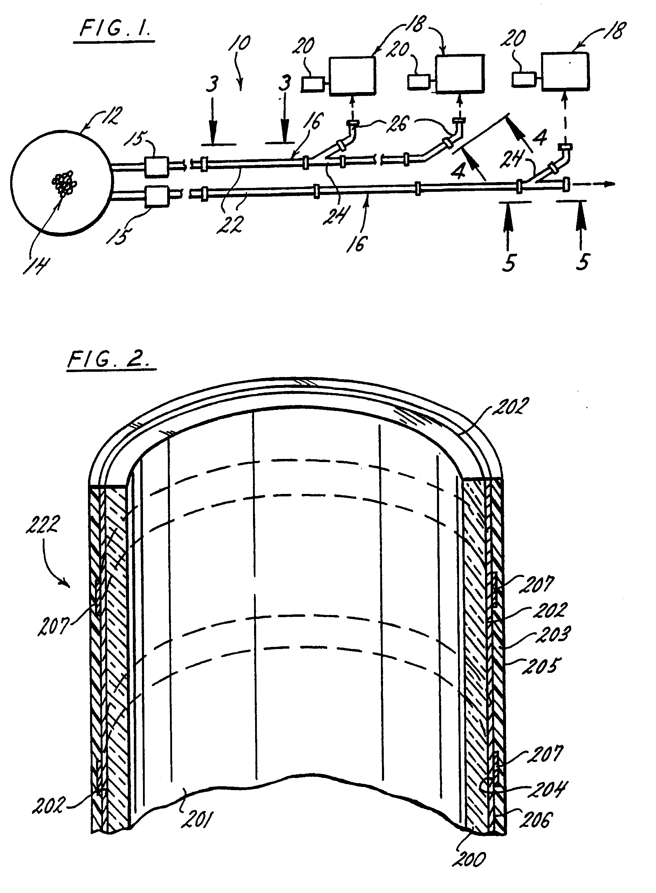

The manufacture of molded plastic items typifies particulate material flow problems and conduit failure in material transfer systems. The manufacture of molded plastic parts, either by compression or injection, utilizes small, discrete plastic cylinders or the like, that may be any color and are referred to in the trade as "pellets". Such pellets are especially abrasive and wear-inducing when the plastic material contains fiberglass as a constituent. Thus, for purposes of disclosing the preferred embodiments of the invention, a typical material conveying or transfer system 10 for the molding of plastic parts is shown in Fig. 1.

The material transfer system 10 comprises a remote storage silo 12 containing a bulk supply of plastic pellets 14, driers 15, one or more delivery lines or piping systems 16, and one or more molding machines 18 to which the pellets 14 are conveyed by vacuum means 20 or the like for manufacturing purposes. The piping system 16 is made up of a series of straight conduits 22, branch "Y" connectors 24 and mitered or sweep elbows 26. It will be understood that a similar material transfer system (not shown) may be employed to charge the bulk storage silo 12 from one or more pellet making machines, and that either pneumatic (positive air pressure) or vacuum may be used to provide pellet flow through the piping systems 16. It will also be understood that the piping system 16 of a typical material conveying system 10 may be made of aluminum, stainless steel, ceramic lined steel, PVC, boro-silicate glass or from a variety of metal alloys. However, a glass piping system is presently preferred for application of the wear indicator invention.

For many years, boro-silicate glass piping systems have been used by various industries because such glass piping systems last a great deal longer than conventional metal piping systems because it has a thicker conduit wall, and it is harder and causes less friction to particulate flow. Glass piping systems may be unarmored, or armored with an exterior fiberglass reinforced material that is applied by encasing the boro-silicate piping with a fiberglass cloth saturated with a polyester resin cured by heat and pressure according to known technology. Thus, the armored pipe system consists of an inner glass conduit or liner encased within a translucent fiberglass reinforced coating or casing. The purpose of the fiberglass armoring is to contain the pellets and prevent massive dumping of the pellets when erosion causes the glass to fail. However, in the past it has been difficult to visually detect this erosion because the flowing colored pellets tend to obscure the erosion. Generally, the highest incidents of failure occur at a change of direction of the glass piping system, such as at the bends of mitered elbows 26, or at the connection joints between conduit sections and the like. In addition, eddy effects are generated by particulate "duning" due to irregularities on the internal transfer surface such as the lack of uniform concentricity of the piping and the variance in the inside diameters of the system at lap joints or due to gaskets between adjoining conduit sections. As a result, these eddy effects may cause significant wear in the areas of such piping irregularities.

The invention relates to a system for indicating by visual means, electronic means or both, that the inner boro-silicate glass piping has been eroded and that the pellets are now in contact with and beginning abrasive wear of the outer fiberglass armoring.

FIGURE 2 illustrates a representative cross-section of one embodiment of the invention employing a visual indicator. The boro-silicate glass conduit 222 has a cylindrical wall 200 with an interior surface 201 which forms an inner passageway or flow path through which the pellets 14 are transferred. Obviously, it is the interior surface area which is subjected to abrasive action resulting in wear-through of the conduit wall 200. The conduit wall 200 has an outer surface 202 opposing the inner surface 201 and which forms the outer circumferential area of conduit 222. An outer conduit casing 203 is formed by the armored fiberglass layer mentioned above for containing the pellet material, and it completely surrounds the wall 200. The outer casing 203 has an inner surface 204 facing outer surface 202 and an outer surface 205. A wear indicator embodying the invention is positioned between the inner surface 204 of outer conduit 203 and the outer surface 202 of conduit wall 200 and is in intimate surface contact with both. In its simplest form, the wear indicator is formed by applying a layer, coating or stripe of predetermined color to the outer surface 202 of the wall 200. A colored indicating layer 206 may be a layer of paint applied to the outer surface 202 before the armored layer or casing 203 is applied over the conduit 222 or other component (24, 26) of the piping system 16. Generally, paint does not adhere well to glass or other nonporous surfaces. However, this does not present a problem because the color indicating layer 20, whether it is paint or some other material, is held in place by outer casing 203. Alternatively, the color indicating layer 206 may be comprised of several contrasting colors painted on outer surface 202 of the wall 200. Also, layer 206 may be a first colored coating or substrate such as a white paint or other light colored coating, applied or painted to the outer surface 202 and then covered, at least in part, by a second layer 207 of contrasting color, such as a black or other dark colored coating, located between the first layer 206 and the outer conduit 203. It has been discovered that a white substrate enhances the color intensity of most wear indicator materials. In one embodiment of the invention, the contrasting layer 207 may be a band or strip of tape applied to a painted coating 206 as illustrated in FIGURE 2. The tape preferably is spirally wound about the coating 206 before being covered by the outer conduit 203. In general, the invention contemplates that any colored substance or layer for usually indicating wear by abrasion may be located between the inner glass liner 200 and the outer fiberglass protective casing 203. The outer fiberglass casing 203 is cured by heat and pressure. In particular, casing 203 is pressure treated, such as by wrapping it with a shrink wrap (e.g., mylar cellophane tape) and heating the shrink wrap at a predetermined temperature to circumferentially pressurize the casing 203. This applied pressure clarifies the setting resin of the fiberglass casing and makes it more transparent so that the colored indicating layer 206 is more visually apparent through the casing 203. Without pressure treatment, the fiberglass casing 203 may tend to be cloudy and almost opaque. The pressure treatment also maintains the colored indicating layer 206 in place between the inner surface 204 and outer surface 202 and maintains layer 203 in intimate contact with wall 200.

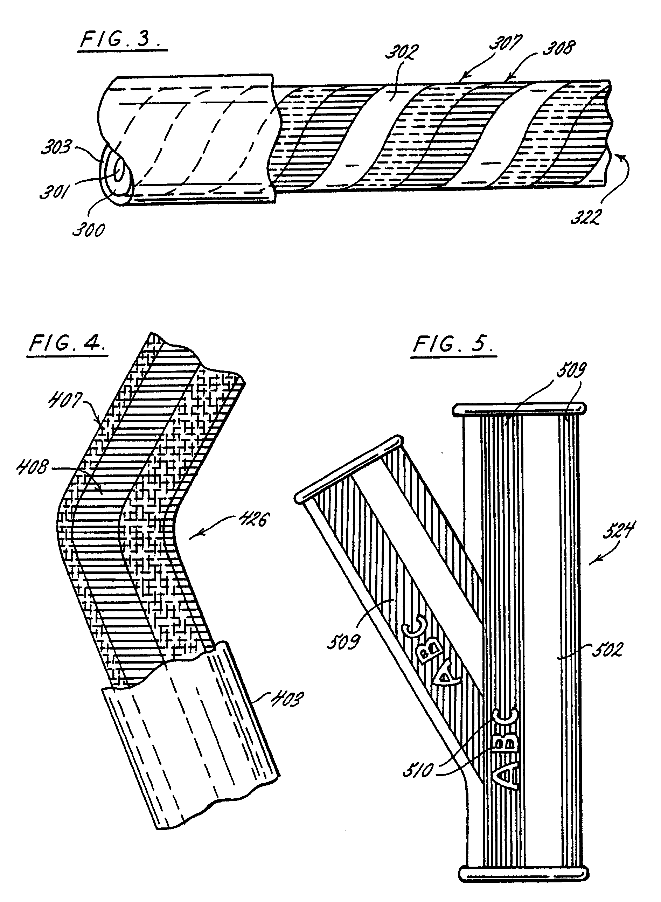

FIGURE 3 illustrates a preferred embodiment in which two widths or bands of contrasting colored tapes 307 and 308 are spirally wound around the outer surface 302 of the glass conduit 322 before an armored casing 303 is applied. In this embodiment the bands 307 and 308 form abutting or contiguous helices and are spaced apart by a similar uncoated band of bare glass conduit wall surface 302 through which the pellets 14 are visible. Inasmuch as different colors of pellets 14 may be stored and delivered through the driers and transfer system piping 16 to the molding machines 18 for making different plastic parts at different times, the contrasting dual tapes 307 and 308 assure that there will always be at least one wear indicator of contrasting color to the pellet color. Consider the case in which yellow pellets are transferred and the pipe is wound with a blue tape 308 adjacent to a yellow tape 307 and the tapes are separated by an untaped band or gap on the conduit outer surface (302). In normal operation, the operator would see the blue tape 308 even though no color distinction can be made between the yellow tape 307 and the yellow pellets. When a portion of the wall 300 of the glass conduit 307 becomes eroded at a wear-through point, the red tape 308 (and yellow tape) will be worn off so that only the yellow pellets will show through at the abraded area where there is no tape. The operator will see only yellow where the red tape had been, and will be visually alerted that the inner wall 300 has been eroded or worn away at that point. This visual warning indicates to the operator that the pellets are now in contact with the outer fiberglass armoring of outer conduit 303. Obviously, in the case of a material delivery or transfer system in which the pellet color is different from both colored bands (i.e., red pellets 14 with yellow and blue color bands 307 and 308), the red pellets will be visible through the untaped band (302 of FIGURE 3) of the glass conduit 322 so all three colors will normally be seen until wear-through of the conduit wall 300 results in abrasion of both colored tapes 307 and 308 and then only the color red will be visible at the wear-through area.

FIGURE 4 is similar to FIGURE 3 in illustrating that dual colored bands 407 and 408 may be applied to an elbow fitting 426 or the like. It is contemplated that different components of the piping system 16 may receive different forms of the wear indicator invention. For instance, the straight length conduit sections 22, 222, 322 may be spirally wound with one or more colored bands (307, 308), and the fittings (24, 26, 426) may be painted and/or tape banded. Obviously, if the material transfer system 10 is designed for a specific particulate or abrasive fluid material of only one predetermined color, then the wear indicator can be designed with a single contrasting color.

It is also contemplated that fluorescent tape or paint may be used as one or both of the colored layers to provide a more vivid visual color recognition. However, for those installations in which the conduit system may be located outdoors or otherwise subjected to ultraviolet radiation, a protective ultraviolet screen or filter must be placed over the fluorescent paint before the armoring is applied in order to prevent fading. Another alternative may be the use of regular masking tape which has been dyed as the contrasting layer 207. Masking tape may be preferable in certain installations which withstand high temperatures. Also, masking tape can withstand the temperatures which are necessary to cure the armored layer outer conduit 203. In contrast, vinyl tape may be used but it tends to shrink slightly at the curing temperature. As indicated, vinyl tapes, such as vinyl fluorescent pressure sensitive tapes, provide much more vivid colors and are easier to inspect and see through the translucent outer conduit 203.

In another preferred embodiment shown in FIGURE 5, pressure sensitive paper tape 509 of a predetermined color (i.e., blue) may be used either as a single color banding or in a dual banded wear indicator system as discussed above. Paper tape can be economically produced in any single color or with multiple bands from a bi-color stripe to a rainbow pattern, and also permits printing with operating or safety instructions or other indicia 510. Thus, a piping "Y" fitting 524 or other conduit or fitting may be axially (or spirally) striped with a color band 509 to leave an untaped area (502) of the fitting or conduit, or the outer surface 502 may have a layer of paint of one color over which a band or tape of contrasting color may be applied, as indicated in FIGURE 2. An object of the invention is for the wear indicator to be abraded off at the wear-through area as quickly as possible, and both paint and paper tape best meet this objective.

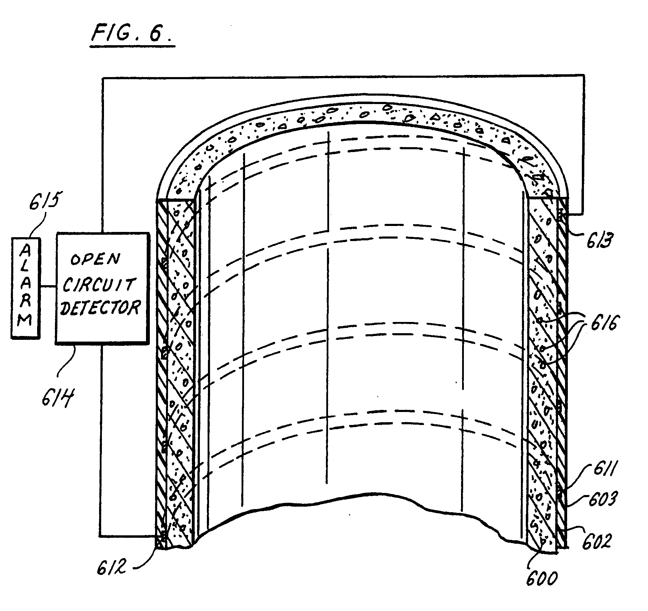

FIGURE 6 illustrates an electronic wear indicating embodiment of the invention. Electrical conductor 611 is spirally wrapped in a continuous helix around the outer surface 602 of conduit wall 600 and is located between wall 600 and outer armored casing 603. Preferably, conductor 611 is relatively narrow in width and relatively shallow in depth, such as a ribbon conductor, so that the conductor is quickly abraded at the wear-through area. The ends 612 and 613 of the conductor 611 are connected to an open circuit detector 614 connected to an audible or visual alarm 615. FIGURE 6 also illustrates another alternative feature of the invention wherein the glass conduit 600 is impregnated or colored with a substance 616, indicated by dots. Preferably, the color of the substance 616 is selected to always be in contrast with the color of the pellets 14 or other material to be transferred. In operation, when the wall 600 is worn away through its outer surface 602 and a portion of conductor 611 is similarly worn through by the pellets being transferred, a discontinuity in the conductor 611 exists that is detected by the open circuit detector 614 and the alarm system 615 is energized to alert the operator that a portion of wall 600 has been worn away and the pellets are in contact and being held in place only by outer armored casing 603. The operator can then locate the precise wear point by visual inspection. This is determined by looking through the transparent outer casing 603 for the point or points where the pellet color can be seen. This wear-through area is visually obvious because a portion of colored wall 600 and a portion of conductor 611 creates a void and the colored pellets 14 are now in direct contact with the outer layer casing 603 and visible at this point.

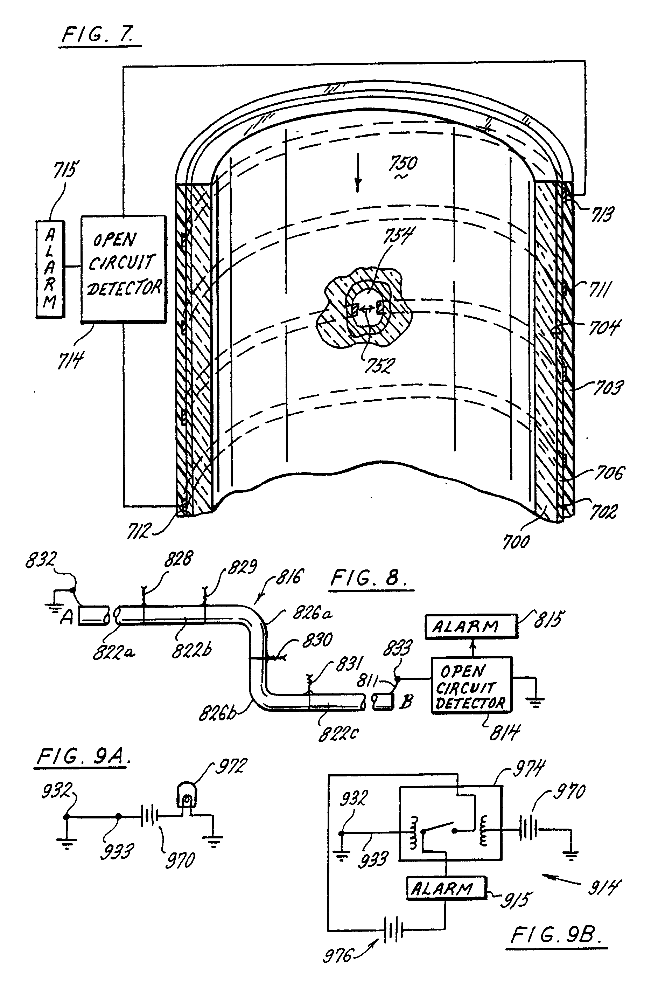

FIGURE 7 illustrates another embodiment of the invention which combines many of the features illustrated in FIGURES 2-6. In particular, outer surface 702 of the conduit wall 700 is covered by a wear indicating layer 706 which, in turn, is covered by an armored layer or casing 703. The inner surface 704 of outer conduit 703 is in intimate contact with the colored indicating layer 706. In addition, an electrical conductor 711 is wound around color indicating layer 706 and is located between the inner surface 704 of outer casing 703 and the colored indicating layer 706. Alternatively, conductor 711 may be located between the outer surface 702 of wall 700 and indicating layer 706 (not shown). As in the FIGURE 6 embodiment, the ends 712 and 713 of conductor 711 are connected to an open circuit detector 714. In operation, when a portion of the conduit wall 700 is worn away, as referred to by reference character 750, a discontinuity (shown by arrows 752) is created within conductor 711 and the corresponding portion of the colored indicating layer 706 is worn away creating an eroded area 754 which can be viewed through transparent outer conduit 703. In this case, open circuit detector 714 would indicate to the operator that a discontinuity is present through the alarm 715 and the operator would locate the discontinuity by visual inspection.

FIGURE 8 is similar to FIGURE 1 in showing a material transfer piping system 816 in which conduit sections 822a, 822b and 822c and elbows 826a and 826b are assembled in a line to create a material flow path from point A to point B. The ends 812 of the electrical conductor 811 of adjacent conduit sections 822a and 822b are joined at point 828. Similarly, the connectors of 822b and 826a, etc. are sequentially connected in series at points 829, 830, 831, etc.. The other end 832 of the section 822a connector is grounded, and the other end 833 of section 822c connector is connected to an open circuit detector 814 including an alarm 815. In operation, open circuit detector 814 monitors the electrical continuity of the conductors 811 between points 832 and 833. Eventually, wear-through at any point within one or more of the piping sections will cause a discontinuity in the conductor line 811 which will result in an open circuit detected by open circuit detector 814 which, in turn, indicates an alarm via alarm 815. The operator is then advised to visually inspect the entire piping system 816 between points A and B to determine where the wear point is located. Alternatively, the operator could check the conductivity of each piping section 822-826 to determine the point of the discontinuity. Visual identification of any area of wear-through and/or electronic signalling will indicate that inspection of the entire system for replacement is in order since internal wear has taken place throughout the piping system 16 and massive failure may be imminent.

FIGURES 9A and 9B illustrate various embodiments of an open circuit detector 914 including an alarm 915. In its simplest form, the open circuit detector may be a power source such as batteries 970 located in series from points 932 and 933 and maintaining a light 972 or other visual indicator. When a discontinuity exists between points 932 and 933, the circuit is opened so that light 972 goes off and provides an indication that an open circuit condition exists. Alternatively, normally closed relay 974 may be located in series with battery 970 as illustrated in FIGURE 9B. Battery 970 maintains normally closed relay 974 in an open condition (as illustrated) so that no power is supplied to alarm 915 from battery 976. When a discontinuity exists between points 932 and 933, power to normally closed relay 974 is interrupted causing the relay to close and complete the power circuit to alarm 915. The activation of alarm 915 (such as a bell or light) provides an indication to the operator that an open circuit condition exists and wear-through has occurred in the piping system.

In view of the above, it will be seen that the several objects of the invention are achieved and other advantageous results attained.

## Claims

1. An early warning system in combination with a material transfer system (10), said material transfer system having an elongated area (16) to be monitored for internal wear caused by the erosive action of a transfer material flowing past said elongated monitored area and comprising a material transfer conduit (22,24,26) having a tubular wall (200,300,400,524,600,700) with an inner wall surface (201,301,401,601,701) forming a material flow passageway and an outer wall surface (202,302,402,502, 602,702), characterised by said early warning system comprising wear detection means intimately associated with at least an elongate portion of said outer wall surface and defining said monitored area, and comprising a translucent outer containment layer (203,303,403,603,703) which encases the outer wall surface (202) of said tubular wall (200), and by said wear detection means comprising a visible indicator (206,207,306, 407,408,509,510,616,706) having a distinguishing characteristic which is visually discernable through said outer containment layer for indicating the relative integrity along the length of the tubular wall, whereby when said erosive action abrades and wears away said visible indicator of said wear detection means where said erosive flow action of said transfer material on said inner wall surface has worn through the associated portion of said tubular wall, such abrasion and wear-through will be visually indicated, thereby providing an early warning of the impending failure of said material transfer system, said outer containment layer being constructed and arranged for confining the transfer material within the flow passageway when said transfer means and said wear detection means wears-through.

2. The early warning system of claim 1, in which said visible indicator comprises a coloured layer (206) applied in the intimate surface contact with said portion of said outer wall surface (202) whereby visual inspection will signal relative wear-through indicative of the integrity of the material transfer conduit.

3. The early warning system of claim 2, wherein said coloured layer comprises tape (207) affixed to said outer wall surface (202), said tape being selected from a class of vinyl, paper and masking tape.

4. The early warning system of claim 3, wherein said tape (207) is a fluorescent tape coated with an ultraviolet screen.

5. The early warning system of claim 3, wherein said tape (207) is a pressure sensitive tape of predetermined colour.

6. The early warning system of claim 3, in which said tape (207) is spirally wound around said outer wall surface (202) of said tubular wall (200).

7. The early warning system of claim 3, in which said tape (207) is axially oriented on said outer wall surface (202) of said tubular wall (200).

8. The early warning system of claim 2, wherein said coloured layer (206) comprises a layer of paint on the outer wall surface (202) of said transfer conduit (200).

9. The early warning system of claim 8, in which a white substrate is applied to the outer wall surface, and said layer of paint is applied over said substrate.

10. The early warning system of claim 2, in which said coloured layer (206) is comprised of two different and contrasting colours, at least one of which is visually distinguishable from the colour of the transfer material.

11. The early warning system of claim 10, in which said two contrasting colours are applied as dual spiral bands (307, 308, 407, 408) to said outer wall surface (302, 402).

12. The early warning system of claim 2, in which said tubular wall (300) is formed of glass, and said colour layer (307, 308) is constructed and arranged to provide an uncovered area (302) of said outer wall surface through which the colour of the transfer material is visible.

13. The early warning system according to claim 1, in which said tubular wall (600) is formed of glass, and said visible indicator comprises particles (616) of predetermined colour impregnated within said tubular wall and being in contrast to the colour of said transfer material, whereby the colour of the transfer material visually signals the point where said tubular wall wears through.

14. The early warning system of claim 1, in which said tubular wall is formed of glass, and said containment layer comprises a translucent or transparent outer casing formed of fibreglass.

15. The early warning system of claim 1, wherein said visible indicator comprises a coloured layer (206) on the outer wall surface (202) of the transfer conduit (22), said coloured layer having a colour which is different from the colour of the transfer material, whereby when the coloured layer is worn away, the colour of the transfer material is visually noticeable at the worn-away location of the transfer conduit.

16. The early warning system of claim 1, in which said wear detection means further comprises electric signalling means applied to at least a section of said outer wall surface, said signalling means comprising an electrical conductor member in intimate contact with said outer wall surface, an open circuit detector (714, 814) connected in a closed circuit with said conductor member (711, 811) and alarm means (715, 815) responsive to the open circuit detector (714, 814) for signalling the discontinuity in said conductor member (711, 811) when said conductor member is worn through following wear-through of said tubular wall.

## Patentansprüche

1. Frühwarnsystem in Kombination mit einem Materialtransportsystem (10), wobei das Materialtransportsystem einen verlängerten Bereich (16) aufweist, der in bezug auf inneren Verschleiß überwacht werden soll, der durch die erodierende Wirkung eines Transfermaterials bewirkt wird, welches an diesem verlängerten überwachten Bereich vorbeifließt, und einen Materialtransportkanal (22,24, 26) umfaßt, der eine rohrförmige Wand (200,300,400,524, 600,700) mit einer Innenwandfläche (201,301,401,601, 701), die einen Materialflußdurchgang bildet, und einer Außenwandfläche (202,302,402,502,602,702) aufweist, gekennzeichnet durch das Frühwarnsystem, welches Verschleißfeststellmittel umfaßt, welche innig mit zumindest einem verlängerten Abschnitt der Außenwandfläche verbunden sind und den überwachten Bereich bilden, und eine lichtdurchlässige äußere Sicherheitsschicht (203, 303,403,603,703) umfaßt, die die Außenwandfläche (202) der rohrförmigen Wand (200) ummantelt, und durch das Verschleißfeststellmittel, das einen sichtbaren Indikator (206,207,306,407,408,509,510,616,706) umfaßt, der ein wahrnehmbares charakteristisches Merkmal aufweist, das visuell durch die äußere Sicherheitsschicht erkennbar ist, um die relative Unversehrtheit entlang der Länge der rohrförmigen Wand anzuzeigen, wodurch dann, wenn die erodierende Wirkung den sichtbaren Indikator des Verschleißfeststellmittels an der Stelle abreibt und abnützt, an der der erosive Strömungsvorgang des Transfermatierals auf die Innenwandfläche den zugehörigen Abschnitt der rohrförmigen Wand durchgerieben hat, dieser Abrieb und der Durchrieb visuell angezeigt werden, wodurch eine frühzeitige Warnung des bevorstehenden Versagens des Materialtransportsystems vorgesehen wird, wobei die äußere Sicherheitsschicht so konstruiert und angeordnet ist, daß sie das Transfermaterial in dem Strömungsdurchgang einschließt, wenn das Transfermittel und die Verschleißfeststelleinrichtung durchgerieben werden.

2. Frühwarnsystem nach Anspruch 1, bei dem der sichtbare Indikator eine farbige Schicht (206) umfaßt, die in den innigen Oberflächenkontakt mit dem Abschnitt der Außenwandfläche (202) aufgetragen ist, wodurch eine visuelle Überprüfung einen relativen Durchrieb signalisieren wird, der die Unversehrtheit des Materialtransferkanals anzeigt.

3. Frühwarnsystem nach Anspruch 2, bei dem die farbige Schicht ein Band (207) umfaßt, das an der Außenwandfläche (202) befestigt ist, wobei das Band aus einer Klasse aus Vinylband, Papierband und selbsthaftendem Kreppband ausgewählt wird.

4. Frühwarnsystem nach Anspruch 3, bei dem das Band (207) ein fluoreszierendes Band ist, das mit einem Ultraviolettfilter überzogen ist.

5. Frühwarnsystem nach Anspruch 3, bei dem das Band (207) ein Selbstklebestreifen mit einer vorbestimmten Farbe ist.

6. Frühwarnsystem nach Anspruch 3, bei dem das Band (207) spiralförmig verlaufend um die Außenwandfläche (202) der rohrförmigen Wand (200) gewickelt ist.

7. Frühwarnsystem nach Anspruch 3, bei dem das Band (207) axial auf die Außenwandfläche (202) der rohrförmigen Wand (200) ausgerichtet ist.

8. Frühwarnsystem nach Anspruch 2, bei dem die farbige Schicht (206) eine Schicht aus Farbe auf der Außenwandfläche (202) des Transferkanals (200) umfaßt.

9. Frühwarnsystem nach Anspruch 8, bei dem ein weißes Substrat auf die Außenwandfläche aufgebracht wird, und diese Farbschicht über dem Substrat aufgebracht wird.

10. Frühwarnsystem nach Anspruch 2, bei dem die farbige Schicht (206) aus zwei verschiedenen und kontrastierenden Farben besteht, von denen zumindest eine visuell von der Farbe des Transfermaterials unterscheidbar ist.

11. Frühwarnsystem nach Anspruch 10, bei dem die beiden kontrastierenden Farben als Dualspiralbänder (307, 308, 407, 408) auf der Außenwandfläche (302, 402) aufgebracht werden.

12. Frühwarnsystem nach Anspruch 2, bei dem die rohrförmige Wand (300) aus Glas gebildet ist und die Farbschicht (307, 308) so konstruiert und angeordnet ist, daß sie eine nicht abgedeckte Fläche (302) der Außenwandfläche vorsieht, durch die die Farbe des Transfermaterials sichtbar ist.

13. Frühwarnsystem nach Anspruch 1, bei dem die rohrförmige Wand (600) aus Glas gebildet ist und der sichtbare Indikator Teilchen (616) mit einer vorbestimmten Farbe umfaßt, die in der rohrförmigen Wand imprägniert ist und die in Kontrast zu der Farbe des Transfermaterials steht, wodurch die Farbe des Transfermaterials visuell den Punkt signalisiert, an dem die rohrförmige Wand durchgerieben ist.

14. Frühwarnsystem nach Anspruch 1, bei dem die rohrförmige Wand aus Glas gebildet ist und die Sicherheitsschicht eine lichtdurchlässige oder transparente äußere Ummantelung umfaßt, die aus Glasfasern gebildet ist.

15. Frührwarnsystem nach Anspruch 1, bei dem der sichtbare Indikator eine farbige Schicht (206) auf der Außenwandfläche (202) des Transferkanals (22) umfaßt, wobei die farbige Schicht eine Farbe aufweist, die sich von der Farbe des Transfermaterials unterscheidet, wodurch dann, wenn die farbige Schicht abgerieben ist, die Farbe des Transfermaterials an der weggeriebenen Stelle des Transferkanals visuell bemerkbar wird.

16. Frühwarnsystem nach Anspruch 1, bei dem das Verschleißfeststellmittel desweiteren elektrische Signalisiermittel umfaßt, die an zumindest einem Abschnitt der Außenwandfläche angelegt werden, wobei das Signalisiermittel ein elektrisches Leiterelement in innigem Kontakt mit der Außenwandfläche umfaßt, einen Leerlaufschaltungs-Detektor (714, 814), der mit dem Leiterelement (711, 811) und Alarmmitteln (715, 815), die auf den Leerlaufschaltungs-Detektor (714, 814) reagieren, in einem in sich geschlossenen Stromkreis geschaltet ist, um die Diskontinuität in dem Leiterelement (711, 811) zu signalisieren, wenn das Leiterelement nach dem Durchrieb der rohrförmigen Wand durchgerieben wird.

## Revendications

1. Système d'avertissement précoce associé à un système (10) de transfert de matière, ledit système de transfert de matière ayant une zone allongée (16) à surveiller pour détecter l'usure interne provoquée par l'action érosive d'une matière transférée passant devant ladite zone allongée surveillée et comprenant un conduit (22,24,26) de transfert de matière ayant une paroi tubulaire (200,300,400,524,600,700) avec une surface inté-rieure (201,301,401,601,701) de paroi formant un passage pour l'écoulement de la matière et une surface extérieure (202,302,402,502,602,702) de paroi, caractérisé en ce que ledit système d'avertissement précoce comporte un moyen de détection d'usure coopérant étroitement avec au moins une partie allongée de ladite surface extérieure de paroi et définissant ladite zone surveillée, et comprenant une couche extérieure de confinement translucide (203,303,403, 603,703) qui entoure la surface extérieure (202) de ladite paroi tubulaire (200), et en ce que ledit moyen de détection d'usure comporte un témoin visible (206,207,306, 407,408,509,510,616,706) ayant une caractéristique distinctive qui est discernable visuellement à travers ladite couche extérieure de confinement pour indiquer l'intégrité relative le long de la paroi tubulaire, grâce à quoi, lorsque ladite action érosive use et efface ledit témoin visible dudit moyen de détection d'usure lorsque l'action érosive de la circulation de ladite matière transférée sur ladite surface intérieure de paroi a fini par user la partie correspondante de ladite paroi tubulaire, lesdites abrasion et usure sont signalées visuellement, en fournissant de ce fait un avertissement précoce de la défaillance imminente dudit système de transfert de matière, ladite couche extérieure de confinement étant construite et agencée pour confiner la matière transférée dans le passage d'écoulement lorsque ledit moyen de transfert et ledit moyen de détection d'usure s'usent.

2. Système d'avertissement précoce selon la revendication 1, dans lequel ledit témoin visible comporte une couche colorée (206) étroitement appliquée au contact de ladite partie de ladite surface extérieure (202) de paroi, grâce à quoi un contrôle visuel signalera une usure relative témoignant de l'intégrité du conduit de transfert de matière.

3. Système d'avertissement précoce selon la revendication 2, dans lequel ladite couche en couche comporte un ruban (207) fixé à ladite surface extérieure (202) de paroi, ledit ruban étant choisi dans une catégorie de ruban en vinyle, en papier et de masquage.

4. Système d'avertissement précoce selon la revendication 3, dans lequel ledit ruban (207) est un ruban fluorescent enduit d'une protection contre les rayons ultraviolets.

5. Système d'avertissement précoce selon la revendication 3, dans lequel ledit ruban (207) est un ruban autocollant d'une couleur prédéterminée.

6. Système d'avertissement précoce selon la revendication 3, dans lequel ledit ruban (207) est enroulé en spirale autour de ladite surface extérieure (202) de ladite paroi tubulaire (200).

7. Système d'avertissement précoce selon la revendication 3, dans lequel ledit ruban (207) est orienté axialement sur ladite surface extérieure (202) de ladite paroi tubulaire (200).

8. Système d'avertissement précoce selon la revendication 2, dans lequel ladite couche colorée (206) comporte une couche de peinture sur la surface extérieure (202) de paroi dudit conduit de transfert (200).

9. Système d'avertissement précoce selon la revendication 8, dans lequel un substrat blanc est appliqué sur la surface extérieure de paroi, et ladite couche de peinture est appliquée sur ledit substrat.

10. Système d'avertissement précoce selon la revendication 2, dans lequel ladite couche colorée (206) comprend deux couleurs différentes et contrastantes, dont l'une au moins peut être distinguée visuellement de la couleur de la matière transférée.

11. Système d'avertissement précoce selon la revendication 10, dans lequel lesdites deux couleurs contrastantes sont appliquées sous la forme de doubles bandes spiralées (307, 308, 407, 408) sur ladite surface extérieure (302, 402) de paroi.

12. Système d'avertissement précoce selon la revendication 2, dans lequel ladite paroi tubulaire (300) est en verre, et ladite couche colorée (307, 308) est construite et agencée pour constituer une zone découverte (302) de ladite surface extérieure de paroi par l'intermédiaire de laquelle la couleur de la matière transférée est visible.

13. Système d'avertissement précoce selon la revendication 1, dans lequel ladite paroi tubulaire (600) est en verre, et ledit témoin visible comporte des particules (616) de couleur prédéterminée imprégnant ladite paroi tubulaire et contrastant avec la couleur de ladite matière transférée, grâce à quoi la couleur de la matière transférée signale visuellement l'endroit où s'use ladite paroi tubulaire.

14. Système d'avertissement précoce selon la revendication 1, dans lequel ladite paroi tubulaire est en verre, et ladite couche de confinement comporte une enveloppe extérieure translucide ou transparente en fibres de verre.

15. Système d'avertissement précoce selon la revendication 1, dans lequel ledit témoin visible comporte une couche colorée (206) sur la surface extérieure (202) de paroi du conduit de transfert (22), ladite couche colorée étant d'une couleur différente de la couleur de la matière transférée, grâce à quoi, lorsque la couche colorée est usée, la couleur de la matière transférée peut s'observer visuellement à l'emplacement usé du conduit de transfert.

16. Système d'avertissement précoce selon la revendication 1, dans lequel ledit moyen de détection d'usure comporte en outre un moyen de signalement électrique appliqué sur au moins une partie de ladite surface extérieure de paroi, ledit moyen de signalement comprenant un élément formant conducteur électrique en contact étroit avec ladite surface extérieure de paroi, un détecteur (714, 814) de circuit ouvert relié en circuit fermé avec ledit élément conducteur (711, 811) et un moyen d'alarme (715, 815) réagissant au détecteur (714, 814) de circuit ouvert pour signaler la discontinuité existant dans l'élément conducteur (711, 811) lorsque ledit élément conducteur est usé, à la suite de l'usure de ladite paroi tubulaire.
